Europäisches Patentamt

European Patent Office

Office européen des brevets

(19)

(11) Publication number: **0 381 632**
**A2**

(12) **EUROPEAN PATENT APPLICATION**

(21) Application number: **90830027.0**

(22) Date of filing: **25.01.90**

(51) Int. Cl.⁵: **B29D 30/54**

(30) Priority: **27.01.89 IT 4758689**

(43) Date of publication of application:
**08.08.90 Bulletin 90/32**

(84) Designated Contracting States:
**BE DE DK ES FR GB NL SE**

(71) Applicant: **MARIGO S.r.l.**
**Via Fosso Foreste**
**I-65016 Montesilvano (Pescara)(IT)**

(72) Inventor: **Frattone, Nicola, Marigo S.r.l.**
**Via Fosso Foreste**
**I-65016 Montesilvano (Pescara)(IT)**
Inventor: **Quetti, Giuseppe Marigo S.r.l.**
**Via Fosso Foreste**
**I-65016 Montesilvano (Pescara)(IT)**
Inventor: **Grammatica, Cristoforo Vittorio,**
**Marigo S.r.l.**
**Via Fosso Foreste**
**I-65016 Montesilvano (Pescara)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Apparatus for retreading pneumatic tyres.**

(57) An apparatus for retreading pneumatic tyres comprises elements (1, 2) for holding the pneumatic tyres carcass (3) and provided for at least contacting the beads (4) and sidewalls (5) of the carcass, the apparatus further comprising restraining elements (8) which can be outward displaced from the inside of the carcass (3) so as to contact the beads (4) and tightly press then against the holding elements (1, 2) fixedly supported by the apparatus frame at least during the curing step of the pneumatic tyre carcass (3).

FIG. 1

## BACKGROUND OF THE INVENTION

The present invention relates to an apparatus for retreading pneumatic tyres and, more specifically, to a radial or curing press apparatus.

As is known, in order to retread pneumatic tyres there are at present used apparatus called "radial or curing presses" which comprise elements for properly arranging and holding the pneumatic tyre carcass to be retreaded.

These carcass holding elements are supported by respective springs or hydraulic cylinders which are parallel to the axis of the pneumatic tyre carcass and are arranged on opposite sides of the carcass.

These springs or cylinders are operated so as to cause said carcass holding elements to be displaced toward one another as far as the inner pneumatic pressure in the carcass overcomes their resistance so as to bring them again to an operating position against the fixed supports of the press.

These carcass holding elements are usually horizontally arranged and have opposite surfaces so shaped as to engage a respective bead and the near region of the corresponding sidewall of the carcass.

The apparatus also comprises means for supplying pressurized air into the inside of the carcass.

The method for curing the pneumatic tyre carcass comprises a baking step in which the pneumatic tyre carcass is baked at a set temperature while being subjected to a set inner pressure.

This inner pressure, in conventional pneumatic tyres provided with an inner bladder, that is the so-called tube-type pneumatic tyres, is provided by introducing thereinto the bladder and inflating it.

On the other hand, in conventional tubeless pneumatic tyre, the inner set pressure can be exlusively obtained by providing a perfect air tightness between the tyre beads and the carcass holding elements during the overall tyre carcass processing operation.

Before curing this tubeless pneumatic tyres, it is necessary to perfectly tightly arrange the pneumatic tyre carcass against the carcass holding elements. In conventional pneumatic tyre presses, after having displaced toward one another the carcass holding elements, the inside of the carcass is pressurized by pressurized air. This pressurized air, in particular, has a reduced pressure value, of about 3 atm, which is less than that required in the baking step (of about 10-11 atm) and should be sufficient to overcome the starting compression force provided by the hydraulic cylinders on the carcass restraining or holding elements in order to allow the pneumatic tyre carcass to be properly arranged between the carcass holding elements and so as to allow the carcass holding elements to properly contact the carcass beads.

Then, after having monitored the success of the first step, the air pressure is increased to the above mentioned baking value so as to fully overcome the spring or cylinder resistance and bring the carcass holding elements and carcass beads to the proper curing position.

The above disclosed method is affected by several drawbacks the main of which is that this method requires a lot of expensive processing time since the pre-compression step requires a long time; moreover, it is very difficult to obtain a perfect tightness between the carcass beads and carcass holding elements because of a possible mutual slipping caused by the necessary displacements.

Another un-evitable drawback is that it is not possible to obtain a perfect tightness since this tightness is exclusively provided by the inner pressure of the pneumatic tyre carcass which presses the carcass beads against the carcass holding elements. In particular, since the tire carcass is not homogeneous and is circumferentially uneven, and since the carcass hold ing elements must move against the axis of said carcass, during the pre-compression, compression and baking steps the carcass can be subjected to deleterious displacements or deformations which can not be corrected by the air pressure; moreover during the baking step the carcass is also subjected to thermal deformations/expansions which negatively affect the tightness between the carcass beads and carcass holding elements.

This unsatisfactory tightness during the pre-compression step means that all of the above disclosed operations must be necessarily manually repeated; moreover, a not properly carried out baking step can deleteriously damage the finished pretreaded pneumatic tyre.

Yet another drawback of prior pneumatic tyre retreading apparatus is the difficulty encountered in curing tyre carcasses having partially or locally damaged beads: in this case, in order to provide a proper tightness between the carcass beads and carcass holding elements, even at damaged regions, there is frequently used a carcass inner pressure much greater than the optimal curing pressure which can lead to a poor quality finished retreaded tyre.

## SUMMARY OF THE INVENTION

Accordingly, the aim of the present invention is to overcome the above mentioned drawbacks by providing a pneumatic tyre retreading apparatus which provides the possibility of retreading conventional pneumatic tyres without the need of introducing thereinto a bladder, with a consequent further reduction of the pneumatic tyre processing time and with a less consumption of bladders which, under the baking conditions, are irreparably deteriorated.

According to one aspect of the present invention, the above aim, as well as yet other objects, which will become more apparent hereinafter, are achieved by a pneumatic tyre retreading apparatus comprising elements for bilaterally holding or restraining the pneumatic tyre carcass, said holding elements being provided for tightly contacting the carcass beads and sidewalls, said apparatus further including a plurality of restraining elements which can be displaced from the inside of the pneumatic tyre carcass so as to contact, in the inside of said carcass, said carcass beads to press said beads against said carcass holding elements which are fixedly supported during the pneumatic tyre baking or curing step.

One of the advantages of the present invention is that the inventive apparatus can be simply and quickly operated since it is not necessary to accurate ly and precisely arrange the pneumatic tyre carcass between the carcass holding elements, the tightness between the carcass beads and carcass holding elements being circumferentially provided at a plurality of points, owing to the pressure provided by the holding elements on the carcass beads.

## BRIEF DESCRIPTION OF THE DRAWINGS

The pneumatic tyre retrading apparatus according to the present invention will be disclosed in a more detailed way hereinafter with reference to the accompanying drawings which illustrate an exemplary and not limitative embodiment of the inventive apparatus and in which:

Figure 1 is an axial cross-sectional view of the main elements of the pneumatic tyre retreading apparatus according to the invention, some parts being broken away in order to better illustrate other parts, said apparatus being shown with the apparatus elements arranged on the opposite sides of the apparatus axis at two different operating conditions; and

Figure 2 is a cross-sectional view taken along the section line II-II of Figure 1, some parts being broken away in order to better show other apparatus parts.

## DESCRIPTION OF THE PREFERRED EMBODIMENT

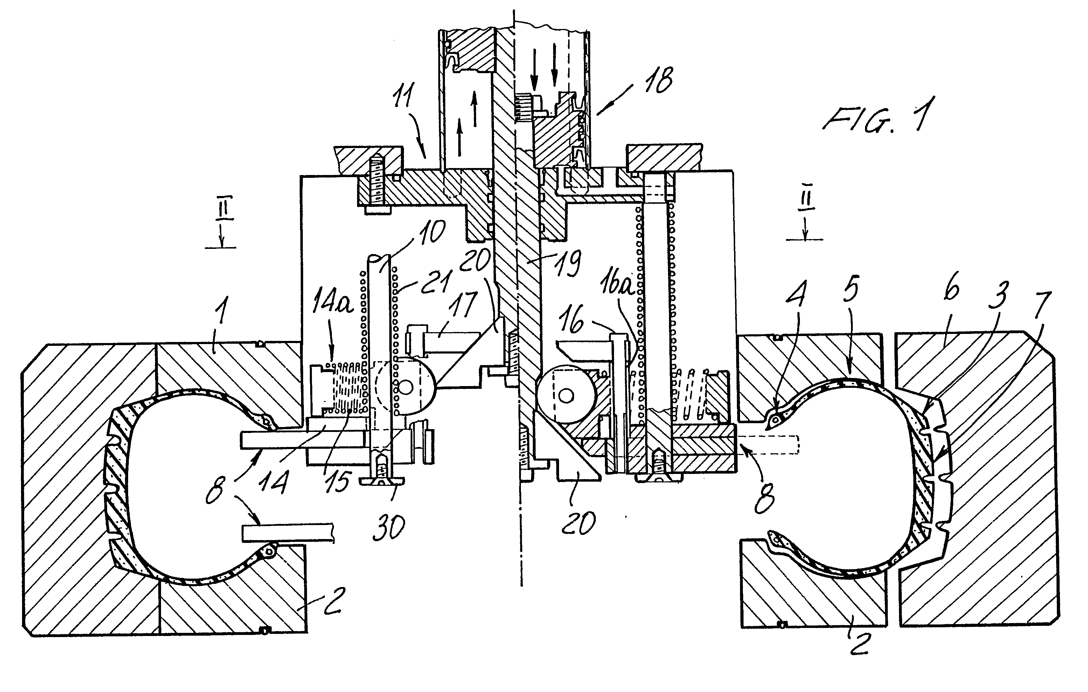

With reference to the figures of the accompanying drawings, and in particular to figure 1, the pneumatic tyre retreading apparatus according to the present invention essentially comprises two coaxial pneumatic tyre holding elements 1, 2 which are bilaterally arranged of the carcass 3 to be cured and are also arranged substantially coaxially with respect to said carcass 3.

This carcass holding elements 1, 2 which are usually made as a single piece or as discrete elements, are vertically arranged in such a way that the bottom carcass holding element 2 supports the pneumatic tyre carcass 3.

The opposite surfaces of the carcass holding elements 1 and 2 are so designed as to matingly receive each a carcass bead 4 and the adjacent inner region of the corresponding sidewall 5 of the carcass 3. Outside of the carcass holding elements 1 and 2 there is provided a closing element 6 provided for contacting the outer portion of the sidewalls 5 and the tread region 7 of the carcass 3.

The apparatus further comprises a pressurized air source, with related pressurized air supply lines, not shown, which lead to the inside of the carcass 3 arranged between the carcass holding elements 1 and 2.

According to the present invention, the apparatus also comprises a plurality of restraining elements 8, which are movable from the inside of the pneumatic tyre carcass 3 toward the outside thereof so as to contact, inside said carcass, the carcass beads 4 to press them against the carcass holding elements 1 and 2.

The carcass holding elements 1 and 2 are supported by a not shown frame, so that said elements can be interexchanged depending on the size and type of the carcass 3, and can be removed to allow for the carcass to be arranged therebetween, said elements 1 and 2 being held in a fixed condition after having arranged therebetween the carcass 3 to be cured.

In the shown embodiment, the restraining elements 8 comprise two corresponding pluralities of flat arms extending along radial directions of the carcass 3.

The apparatus, accordingly, comprises a first plurality of arms 8 cooperating with the carcass holding elements 1 and a second plurality of arms 8 cooperating with the carcass holding elements 2.

These two pluralities of arms 8 are support ed by corresponding equal and mirror like coaxial supporting frames which are arranged with respect to the transverse symmetry plane of the carcass 3; figure 1 shows one only of this supporting frames, since the other supporting frame is equal to the shown supporting frame and is arranged with a mirror-like arrangement with respect it.

The arms 8 are supported by an annular supporting plate 9 which is coaxial to the carcass 3 and is in turn supported by a plurality of small uprights 10 parallel to the axis of the plate 9 and rigid, at their top ends, with a supporting frame 11. To the top of the plate 9 there is affixed, through spacer elements, not shown, an annular counter-plate 14 defining with said plate 9 a plurality of seats adapted to receive with a free axial sliding relationship the arms 8.

Each arm 8 has its end portions projecting from a respective seat defined by the plate 9 and counter-plate 14 and is preferably provided, at its end portion away from the axis of the carcass 3, with a T-shape provided for increasing its contact region with the respective carcass bead 4.

At its other end portion, each arm 8 rigidly supports two parallel brakets 12 which are perpendicular to each said arm 8 and support respective cam follower roller 13. Between the brakets 12 and an abutment 14a of the counter-plate 14 there is arranged a spring 15 for holding the respective arm 8 in a withdrawn position in which it does not project from the plate 9, as shown in the right portion of figure 1.

With the plate 9 there is rigid, through respective pins 16 and related spacer elements 16a, an annular element 17 which is arranged above the cam follower rollers 13.

Each upright 10 is provided at the bottom thereof with an end of stroke element 30 adapted to prevent said plate 9 from disengaging and being associated with a respective spring 21 to displace the plate 9 away from the frame 11.

The supporting frame 11 is supported by a fixed bed, which has not been shown in the drawings for simplicity, and is movable along the axis of the pneumatic tyre carcass 3 so as to be displaced toward or away from the mirror supporting frame 11, provided for supporting the other plurality of arms 8.

With the supporting frame 11 there is rigid a hydraulic cylinder 18, of the double action type, which is coaxial to the plate 19 and the rod 19 of which passes through the supporting frame 11 and said plate 9. To the free end of the rod 19 there is coupled a frustum of cone shaped cam 20 tapering toward the supporting frame 11.

The cam 20 is so designed as to intercept both the idle rollers 13 and the annular element 17 as it will be disclosed hereinafter.

Before curing a pneumatic tyre carcass 3, the carcass holding elements 1 and 2, or at least one of these elements, are removed and mutually moved away to allow the already cured pneumatic carcass 3 to be removed and to arrange therebetween a new pneumatic tyre carcass 3 to be cured.

During this operating step, the cams 20 are arranged near one another, whereas the arms 8 are arranged in their withdrawn configuration inside the perimeter of the plate 9, because of the action of the springs 15, and the plates 8 are arranged near one another under the action of the spring 21 (see the right portion of figure 1).

After having displaced the carcass holding elements 1 and 2 toward one another to a set fixed position, and after having displaced the elements 6 toward said holding elements 1 and 2, the hydraulic cylinder 18 is actuated to withdraw its rod 19 and cause the cams 20 to be moved away from the corresponding cams on the other side of the carcass. At the start the cams 20 will be displaced in contact with the cam follower rollers 13 so as to cause said rollers to be moved away from the axis of the carcass 3. Thus, the arms 8 will be axially and radially displaced of the carcass 3, said arms being thus arranged, on both sides, with their end portions, of preferably T shape, between the beads 4 of the carcass 3 (as shown by the dashed line at the right portion of figure 1).

Then, the cams 20 will engage the annular element 17 and will drive it therewith (see the left portion of figure 1).

Since the annular element 17 is rigid with the plates 9, through the pins 16, these plates 9 will be mutually displaced away from one another and will entrain therewith the arms 8.

At the end of the displacement of the rods 19, the arms 8 will be arranged near the carcass holding elements 1 and 2 and will press against these elements the carcass beads 4.

Thus, the carcass beads 4 are tightly held against the elements 1 and 2 in a positive way and independently from the inner pressure of the carcass 3.

The carcass 3 is thus ready to be pressed and cured, with a perfect tightness between the carcass beads 4 and carcass holding elements 1 and 2, even if the beads 4 are partially damaged; moreover the pneumatic carcass can not slide with respect to the holding elements 1 and 2 during the overall curing step.

Finally, by actuating the hydraulic cylinders 18 so as to cause the cams 20 to move with respect to one another, also the plates 9 will move with respect to one another, and the beads 4 will be disengaged from the holding elements 1 and 2;

then the arms 8 will be withdrawn thereby allowing for the plates 9 to be disengaged from the carcass 3 so as to replace this cured carcass with another carcass to be cured.

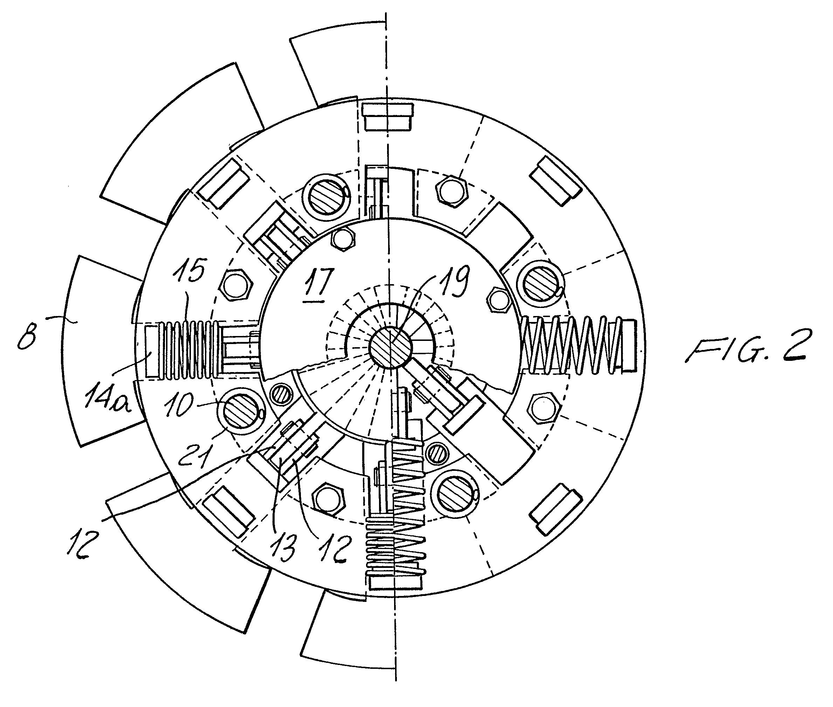

As is shown in figure 2, the number of the arms 8, for each side of the carcass, and of the respective carcass holding elements, and the spacing thereof can be changed so as to optimally circumferentially distribute this element so as to provide a perfect tightness on the beads 4 even in the presence of partial damages thereon.

While the invention has been disclosed and illustrated with reference to a preferred embodiment thereof, it should be apparent that the disclosed embodiment is susceptible to several modifications and variations all of which will come within the spirit and scope of the appended claims.

For example, the arms 8 can be pivoted to the plate 9 and the movement for applying the beads and press them against the holding element 1 and 3 can consist of a single rotary movement about the respective pivot pins.

## Claims

1. A pneumatic tyre retreading apparatus, of the type comprising at least two elements (1, 2) for bilaterally holding the carcass (3) to be retreaded and provided for contacting at least the inner region of the tyre sidewalls, and the beads of said carcass (3) during the curing step thereof, characterized in that said apparatus further comprises elements (8) for restraining the beads (4) of the carcass (3), which restraining elements are adapted to be displaced inside the carcass (3) outward therefrom so as to contact the beads (4) of said carcass and press said beads against said holding elements (1, 2), said holding elements being supported in an interexchangeable way depending on the size and type of said carcass (3) and being movable to receive said carcass (3) therebetween, and being held in a fixed condition during said curing step.

2. An apparatus according to claim 1, characterized in that said carcass restraining elements (8) comprise a plurality of elements arranged, at the centre of said carcass (3), along radial direction of said carcass and synchronously movable by a single or composite movement, along the respective extension direction and along an axial direction of said carcass, said restraining elements (8) being arranged in two pluralities on both sides of said carcass and being movable, along said axial direction, so as to mutually move to or away from said opposite beads of said carcass (3).

3. An apparatus according to claim 1, characterized in that said holding elements (8) comprise, on both sides of said carcass (3), a plurality of coplanar flat arms supported by respective supporting elements (9, 14) coaxial to said carcass and each supported by a supporting frame (3) coaxial with said supporting elements and movable, along the axis of said carcass (3), said arms (8) extending radially from said carcass and being radially movable, said apparatus further comprising means (20) supported by said supporting frames (11) to drive said arms (8) and said supporting elements (9, 14) along the axis of said carcass, resilient return means (15, 21) being moreover provided operating on said arms (8) and respectively on said supporting elements (9, 14) so as to hold said supporting elements are respective rest positions in which, respectively, said arms (8) are arranged near the axis of said carcass (3) and said supporting elements (9, 14) are arranged adjoining one another.

4. An apparatus according to claim 3, characterized in that each said arm (8) has its end remote from the axis of said carcass (3) having a T shape in order to increase its contact region with the respective carcass bead (4).

FIG. 1

FIG. 2